# EUROPEAN PATENT APPLICATION

(11) **EP 1 387 286 A2**
(43) Date of publication of application: **04.02.2004**
(21) Application number: 03015311.8
(22) Date of filing: 07.07.2003
(51) Int. Cl.: G06F 15/02

(54) **Information processing device, information processing method, information processing program, and storage medium having the information processing program**

(30) Priority: 09.07.2002 JP 2002199574
(71) Applicant: Sharp Kabushiki Kaisha, Osaka 545-8522 (JP)
(72) Inventor: Kobayashi, Kiyoshi, Soraku-gun, Kyoto 619-0237 (JP); Izumitani, Yukio, Nara 630-8133 (JP); Miyamoto, Kazuhiro, Nara 639-1001 (JP)
(74) Representative: Müller - Hoffmann & Partner

(57) **Abstract**

An information processing device includes data storing means for storing file data at least including date information; calendar displaying means for displaying a calendar; link information creating means for creating link information based on the file data stored in the data storing means, so as to display the file data by being related to the calendar displayed by the calendar displaying means; link information storing means for storing the link information created by the link information creating means; and icon storing means for storing an icon to be displayed in the calendar based on the link information stored in the link information storing means wherein the information processing device displaying the link information stored in the link information storing means in a form of the icon stored in the icon storing means by relating the link information to the calendar. With this arrangement, when carrying out calendar display, the information processing device displays file data, which has been created by the device itself, in the calendar according to date information included in the file data so that the file data is related to the date in the calendar.

## Description

### FIELD OF THE INVENTION

The present invention relates to an information processing device which receives file data transmitted from other information devices, and when carrying out calendar display, the device displays the received file data in the calendar according to date information included in the file data so that the file data is related to the date in the calendar.

### BACKGROUND OF THE INVENTION

Some of conventional information processing devices are provided with a schedule function. This kind of image processing device is generally called a PDA (Personal Digital Assistant) and provided with a schedule function, a phone book function or the like. Some of the devices have been lately developed to be capable of storing data created by a personal computer so as to read out and edit the data as necessary. A PDA accepts, for example, input of an arbitrary schedule, and the whole inputted schedules can be displayed for confirmation for each day by specifying an arbitrary date in a monthly calendar display or a weekly calendar display.

Further, the function allows input of plural schedules for an arbitrary date, and the whole inputted plural schedules can be displayed in a schedule display screen for the day.

The conventional image processing device is also provided with a handwriting note attachment function in addition to such a schedule function.

The handwriting note attachment function simulates a state where an actual hand writing note is attached to a schedule book. Specifically, the function allows creation of an arbitrary handwriting note with a handwriting note application provided in the image processing device so as to be attached to an arbitrary schedule. Then the attached handwriting note can be referred as necessary. This prior art can be found in Japanese Laid-Open Patent Application Tokukaisho 62-260264/1987 (published on November 12, 1987).

Furthermore, the conventional image processing device is also provided with a function for receiving data sent from other information devices. The receiving function allows the device to, in case of file data, temporarily store the transmitted data in a storage section of the image processing device. The stored data is read out as necessary so as to be displayed in a display section of the image processing device.

The conventional image processing device is, as thus described, capable of displaying the inputted schedule data or the note attached to the schedule; however, the device only deals with data created by itself.

Further, even when receiving data related to the schedule from other information devices, the device merely stores the data, and the stored data and the schedule have no relation with each other.

Namely, the conventional device is incapable of relating the data transmitted from other information devices with the schedule when the data is stored or displayed in the device.

### SUMMARY OF THE INVENTION

The present invention is made in view of the foregoing conventional problems, and an object is to provide an information processing device for carrying out calendar display based on date information included in file data created therein or in file data transmitted from other information devices, so that the file data is displayed in the calendar while being related to the date of the date information.

In order to solve the foregoing problems, an information processing device according to the present invention includes: time table displaying means for displaying a time table for a first division of time, the time table showing a list of items of second divisions of time which constitute the first division of time, data file receiving means for receiving data file including date information and a content of work, wherein: when the data file receiving means receives the data file, the time table displaying means displays a specific item of the list of items of the second divisions of time according to the date information included in the data file, while indicating a presence of data file corresponding to the specific item.

Further, the time table displaying means may display the time table as a calendar in which the first division of time is a month, and the second divisions of time are days. Further, the time table displaying means may also display the time table as a day schedule in which the first division of time is a day, and the second divisions of time are hours.

Further, information processing device of the present invention may further include data storing means for storing data which is received from a user of the information processing device. Further, the information processing device of the present invention may further include data receiving means for receiving data file from an external device.

Further, an information processing device of the present invention may include: data storing means for storing file data at least including date information; and calendar displaying means for displaying a calendar, the information processing device displaying the file data stored in the data storing means by relating the file data to the calendar displayed by the calendar displaying means.

With the foregoing arrangement, it is possible to easily judge whether or not the file data is attached to the calendar.

Further, an information processing device of the present invention may include: data storing means for storing file data at least including date information; and calendar displaying means for displaying a calendar, the information processing device displaying the file data stored in the data storing means in the calendar displayed by the calendar displaying means, according to date information included in the file data.

With the foregoing arrangement, it is possible to easily judge whether or not the file data exists in the corresponding date of the calendar.

Further, an information processing device of the present invention may include: data receiving means for receiving the file data from the other information device; and calendar displaying means for displaying a calendar, the information processing device displaying the file data received by the data receiving means by relating the file data to the calendar displayed by the calendar displaying means.

With the foregoing arrangement, it is possible to attach file data transmitted from other information devices to the calendar.

Further, an information processing device of the present invention may include: data receiving means for receiving the file data from the other information device; and calendar displaying means for displaying a calendar, the information processing device displaying the file data received by the data receiving means in the calendar displayed by the calendar displaying means, according to date information included in the file data.

With the foregoing arrangement, it is possible to attach file data transmitted from other information devices in the corresponding date of the calendar.

Further, an information processing device of the present invention may include: data storing means for storing file data at least including date information; and calendar displaying means for displaying a calendar, link information creating means for creating link information based on the file data stored in the data storing means, so as to display the file data by being related to the calendar displayed by the calendar displaying means, the information processing device displaying the link information created by the link information creating means by relating the link information to the calendar.

With the foregoing arrangement, it is possible to easily judge whether or not the file data is attached to the calendar.

Further, an information processing device of the present invention may include: data receiving means for receiving the file data from the other information device; calendar displaying means for displaying a calendar; and link information creating means for creating link information based on the file data received by the data receiving means, so as to display the file data by being related to the calendar displayed by the calendar displaying means, the information processing device displaying the link information created by the link creating means by relating the link information to the calendar displayed by the calendar displaying means.

With the foregoing arrangement, it is possible to attach file data transmitted from other information devices to the calendar.

Further, an information processing device of the present invention may include: data storing means for storing file data at least including date information; calendar displaying means for displaying a calendar; and link information creating means for creating link information based on the file data stored in the data storing means, so as to display the file data by being related to the calendar displayed by the calendar displaying means; and icon storing means for storing an icon to be displayed in the calendar based on the link information created by the link information creating means, the information processing device displaying the link information created by the link information creating means in a form of the icon stored in the icon storing means by relating the link information to the calendar.

With the foregoing arrangement, it is possible to easily judge whether or not the file data is attached to the calendar with the display of the icon.

Further, an information processing device of the present invention may include: data receiving means for receiving the file data from the other information device; calendar displaying means for displaying a calendar, link information creating means for creating link information based on the file data received by the data receiving means, so as to display the file data by being related to the calendar displayed by the calendar displaying means; and icon storing means for storing an icon to be displayed in the calendar based on the link information created by the link information creating means, the information processing device displaying the link information created by the link information creating means in a form of the icon stored in the icon storing means by relating the link information to the calendar.

With the foregoing arrangement, it is possible to attach file data transmitted from other information devices to the calendar as an icon.

Further, an information processing device of the present invention may include: data storing means for storing file data at least including date information; calendar displaying means for displaying a calendar; link information creating means for creating link information based on the file data stored in the data storing means, so as to display the file data by being related to the calendar displayed by the calendar displaying means; link information storing means for storing the link information created by the link information creating means; and icon storing means for storing an icon to be displayed in the calendar based on the link information created by the link information creating means, the information processing device displaying the link information created by the link information creating means in a form of the icon stored in the icon storing means by relating the link information to the calendar.

With the foregoing arrangement, it is possible to easily judge whether or not the file data is attached to the calendar with the display of the icon.

Further, an information processing device of the present invention may include: data receiving means for receiving the file data from the other information device; calendar displaying means for displaying a calendar; link information creating means for creating link information based on the file data stored in the data storing means, so as to display the file data by being related to the calendar displayed by the calendar displaying means; link information storing means fo:r storing the link information created by the link information creating means; and icon storing means for storing an icon to be displayed in the calendar based on the link information created by the link information creating means, the information processing device displaying the link information created by the link information creating means in a form of the icon stored in the icon storing means by relating the link information to the calendar.

With the foregoing arrangement, it is possible to attach file data transmitted from other information devices to the calendar as an icon.

Further, an information processing device of the present invention may include: data storing means for storing file data at least including date information; schedule storing means for storing a schedule for a day; and schedule displaying means for displaying the schedule, the information processing device displaying the file data stored in the data storing means by relating the file data to the schedule displayed by the schedule displaying means.

With the foregoing arrangement, it is possible to easily judge whether or not the file data is attached to the schedule.

Further, an information processing device of the present invention may include: data receiving means for receiving the file data from the other information device; schedule storing means for storing a schedule for a day; and schedule displaying means for displaying the schedule, the information processing device displaying the file data received by the data receiving means by relating the file data to the schedule displayed by the schedule displaying means.

With the foregoing arrangement, it is possible to attach file data transmitted from other information devices to the schedule.

Further, an information processing device of the present invention may include: date changing calendar displaying means for displaying a date changing calendar which allows, when the file data is displayed by being related to the calendar by the calendar displaying means, a user to change a date related to the calendar, when the user instructs to change the date related to the calendar by selecting a different date in the date changing calendar displayed by the date changing calendar displaying means, the calendar displaying means displaying the calendar with the date which has been changed.

With the foregoing arrangement, it is possible to change the date of the calendar, which is related to the displayed file data, by using a date changing calendar, so that the file data is related to a different date of the calendar.

Further, an information processing device of the present invention may include: date changing calendar displaying means for displaying a date changing calendar which allows, when the file data is displayed by being related to the calendar by the calendar displaying means, a user to change a date related to the calendar; and link information date changing means for changing date information in the link information storing means when the user instructs to change the date related to the calendar by selecting a different date in the date changing calendar displayed by the date changing calendar displaying means, the information processing device displaying the calendar with the date which has been changed.

With the foregoing arrangement, it is possible to change the date of the calendar, which is related to the displayed file data, by selecting an arbitrary date of a date changing calendar, so that the file data is related to a different date of the calendar.

Further, an information processing device of the present invention may be arranged so that: the data storing means separately stores the data file by type of data.

With the foregoing arrangement, it is possible to confirm the list of the file data at sight, since the file data is stored by type of data.

Further, an information processing device of the present invention may be arranged so that: the link information storing means stores a date, a folder name indicating a type of the data, and a file name of the data. With the foregoing arrangement, it is possible to create the link information with a dramatically small amount of data.

Further, an information processing method of the present invention may include : the steps of: (a) receiving file data from other information device; (b) storing file data which has been received; (c) creating link information based on such as date information included in the file data which has been stored; (d) displaying a calendar; (e) displaying related information in the calendar with respect to a date corresponding to a date in the link information which has been created.

With the foregoing arrangement, it is possible to attach file data transmitted from other information devices to the calendar as an icon.

Further, an information processing program of the present invention may be arranged to cause a computer to execute the steps of: (a) receiving file data from other information device; (b) storing file data which has been received; (c) creating link information based on such as date information included in the file data which has been stored; (d) displaying a calendar; (e) displaying related information in the calendar with respect to a date corresponding to a date in the link information which has been created.

With the foregoing arrangement, it is possible to attach file data transmitted from other information devices to the calendar as an icon, and also the present invention can be realized as a program.

Further, by adopting the present invention for a computer-readable storage medium having the information processing program, the present invention can be realized as a medium.

Additional objects, features, and strengths of the present invention will be made clear by the description below. Further, the advantages of the present invention will be evident from the following explanation in reference to the drawings.

### BRIEF DESCRIPTION OF THE DRAWINGS

Figure 1 is a drawing showing the appearance of a PDA which is an information processing device according to the present invention.
Figure 2 is a block diagram showing a system arrangement of the PDA.
Figure 3 is a block diagram showing the detail of a ROM 12.
Figure 4 is a block diagram showing the detail of a RAM 13.
Figure 5 is a flow chart showing processing procedures from data receiving to creation and storage of link information.
Figure 6 is a flow chart showing processing procedures for a schedule application.
Figure 7 is a flow chart showing processing procedures for displaying link information in accordance with a calendar.
Figure 8 is a drawing showing a format of file data.
Figure 9 is a drawing showing the details of a folder storage section 32.
Figure 10 is a drawing showing the detail of a link information storage section 33.
Figure 11 is a flow chart showing creation and storage procedures of link information.
Figure 12 is a drawing showing a concrete example of display of schedules.
Figure 13 is a drawing showing a concrete example of detailed display of input of a new schedule.
Figure 14 is a drawing showing a concrete example of schedules for a week.
Figure 15 is a drawing showing a concrete example of detailed display of a schedule.
Figure 16 is a drawing showing a concrete example of display of a list of files attached to a schedule.
Figure 17 is a drawing showing a concrete example of display of a calendar for a month.
Figure 18 is a flow chart showing changing procedure of date information of file data.
Figure 19 is a drawing showing a concrete example of window display during file processing.
Figure 20 is a drawing showing a concrete example of display of a calendar when the date of file data is to be changed.
Figure 21 is a drawing showing a concrete example of a calendar when the changing of the date of file data is instructed.

### DESCRIPTION OF THE EMBODIMENTS

The following will explain one embodiment of the present invention with reference to Figures.

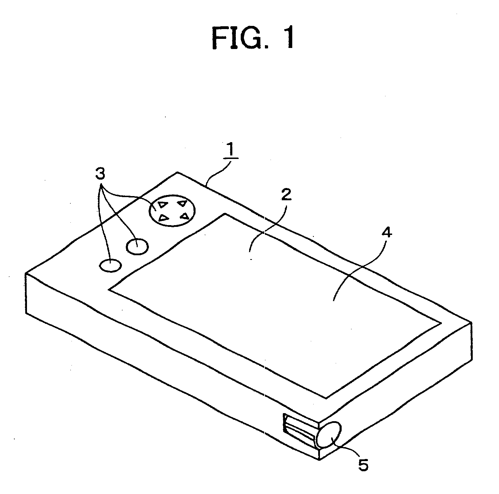

Figure 1 is one embodiment of an information processing device according to the present invention. The figure shows the appearance of a PDA as the information processing device of the present invention. In the figure, 1 denotes the main body of the PDA, 2 denotes a display section, and 3 denotes plural operation keys such as a cursor key.

The display section 2 includes a front surface provided with a transparent tablet 4 so as to allow a user to press input keys (or input buttons) which are displayed in the display section 2, or to input handwriting texts.

When inputting texts etc. with the transparent tablet 4, the user takes a separately-provided input pen 5 from the main body of the PDA and used the input pen 5 for the input.

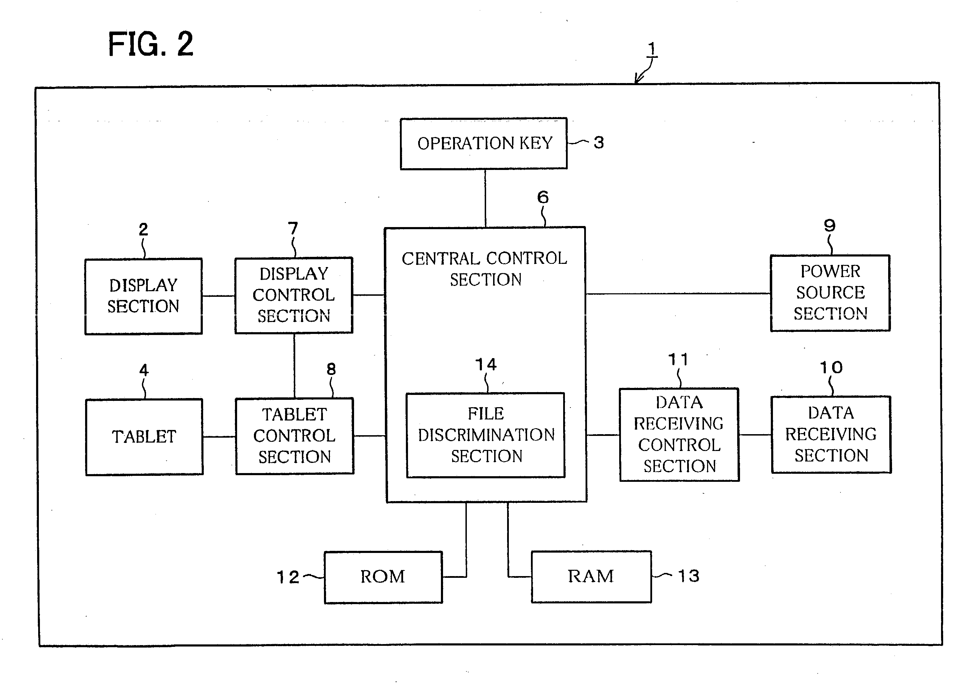

Note that, explanation of the present embodiment will be given based on a PDA as the information processing device; however, the present invention may be adopted for any kinds of information processing devices, such as a personal computer or a mobile phone with data management function, as long as the device is capable of information processing. Figure 2 is a block diagram showing the whole system of the information processing device 1 according to the present invention.

In the figure, 6 denotes a central control section for carrying out input/output control based on various instructions. The periphery of the central control section 6 is arranged as follows.

The display section 2 is connected to the central control section 6 via a display control section 7. The display section 2 is typically made of a liquid crystal display device or the like; however, as long as the device is capable of data display, any kinds of display device may be used.

The tablet 4 is connected to the central control section 6 via a tablet control section 8. Since the inputs through the tablet 4 are performed by pressing the input keys displayed in the display section 2 or by directly writing texts by hand, the tablet control section 8 is also connected to the display control section 7.

Further, 3 denotes an operation key, and 9 denotes a power source section. The power source section 9 supplies power to the central control section 6 when a power source key (not shown) of the operation key 3 is turned on.

In the same figure, 10 denotes a data receiving section for receiving data transmitted from external information devices. This data receiving may be performed via a cable or by wireless communication. Further, infrared communication may also be used for this data receiving operation.

11 denotes a data receiving control section for controlling the data receiving section.

12 denotes a ROM (Read Only Memory) for storing programs etc., such as various application programs compatible with the information processing device 1, or programs for controlling the respective systems connected to the central control section 6, such as a display section, or a tablet.

13 denotes a RAM (Random Access Memory) for storing data inputted to the information processing device 1 or data transmitted from externally information devices via the data receiving section 10.

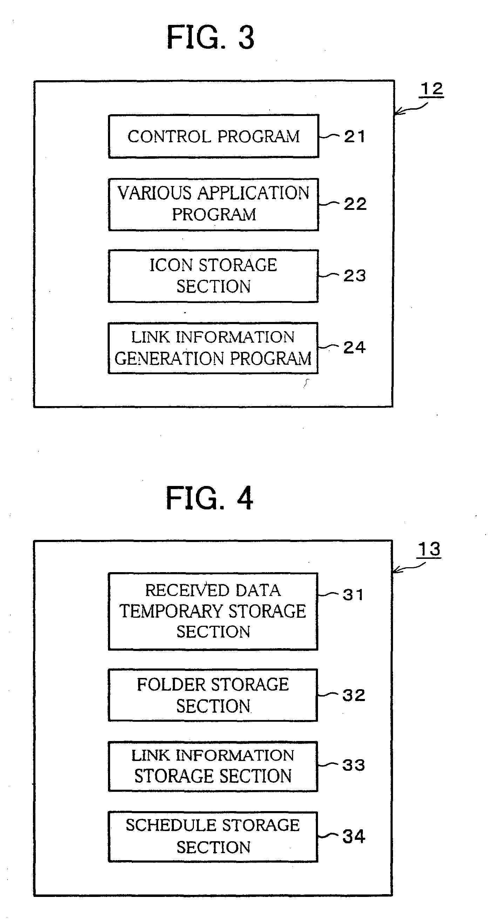

Figure 3 is a drawing showing the detail of the ROM 12.

21 denotes a control program for controlling the respective systems of the PDA. A control program designates a program for carrying out such as display control, tablet control, or control of the data receiving section.

22 denotes various application programs. Various application programs designate programs for a schedule function and/or a phone book function, and a program for displaying image data transmitted from external information devices such as a personal computer. Further, these application programs may be added as required.

In addition to the foregoing application programs, the ROM 12 also stores data to be used in the respective application programs.

23 denotes an icon storage section for storing, for example, icons used in an application program having a schedule function. The icons stored in the icon storage section 23 are appropriately displayed in a calendar.

24 denotes a link information creation program. the details of this program will be described later.

Figure 4 is a drawing showing the details of the RAM 13.

31 denotes a received data temporary storage section for temporarily storing the data transmitted from external information devices via the data receiving section 10.

32 denotes a folder storage section for storing data in the separate folders. The folder storage section 32 stores the file data transmitted from external information devices for each type of the data.

33 denotes a link information storage section for storing link information which is created to relate the data stored in the folder storage section 32 to a calendar at the time of display. The details of this section will be described later.

34 denotes a schedule storage section for storing schedules inputted in the information processing device.

The RAM 13 also stores data created by the various application programs.

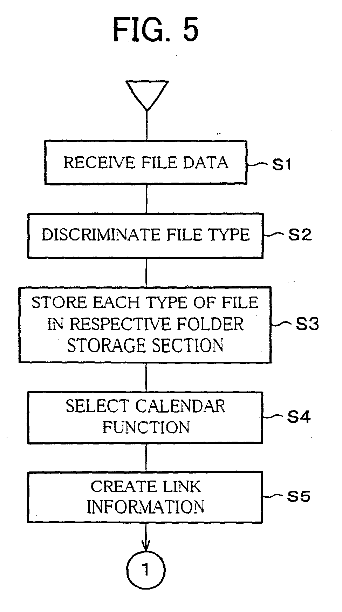

The following will explain operation of the information processing device according to the present invention with reference to Figure 5. Note that, the following explanation is given assuming that the information processing device receives file data from a personal computer.

Figure 5 is a flow chart showing processing procedures of the information processing device from data receiving to creation and storage of link information.

Though the information processing device 1 has various functions, the present: invention particularly deals with a calendar display function and a schedule function.

In Step S1, the device receives file data transmitted from a personal computer. The received data is stored in the received data temporary storage section 31.

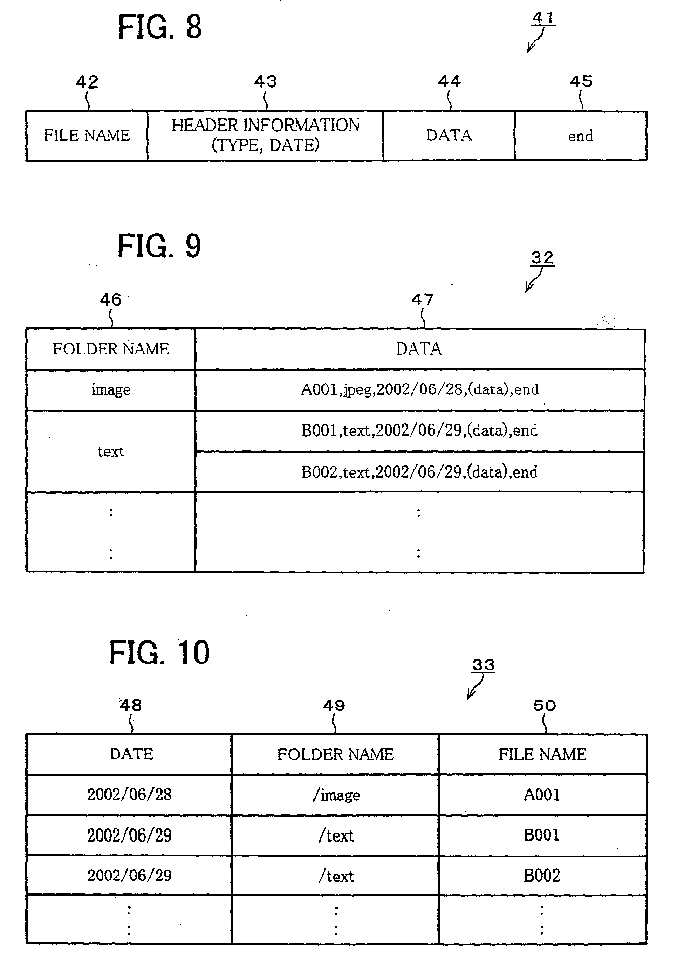

Note that, the file data refers to image data created by the personal computer or captured via the Internet. More specifically, as shown in Figure 8, the file data 41 is in a format constituted of a file name 42, header information 43 including the type of file and date information such as the date created, data 44, and an end 45 for indicating the end of the file data 41.

In Step S2, the device discriminates the type of the file based on file type information included in the header information 43 of the received file data 41. More specifically, the type of the transmitted file is discriminated by a file discrimination section 14 provided in the central control section 6.

In Step S3, the file data is stored in the folder storage section 32 of the RAM 13 in different folders for each file type discriminated in Step S2.

Figure 9 shows one example of the folder storage section 32 in detail. The folder storage section 32 is in the form of a table, and the folder name 46 is given for each type of the file data. In the figure, the "image" folder stores image data, the "text" folder stores text file data made up of characters etc.

The data 47 stores file data. Each file data is stored in the file data format of Figure 8. In one example of the stored data, the file name "A001", the header information "jpeg" for showing the type of data, the date information "2002/06/28", and data and end information are stored.

In Step S4, the device selects the calendar function. Note that, the information processing device 1 is provided with plural functions apart from the calendar function. the calendar function can be selected by selecting a calendar icon displayed in a screen (not shown) of the information processing device. The calendar icon is stored in the icon storage section 23 of the ROM 12.

In Step S5, the link information is created and stored. The creation of the link information is carried out by a link information creation program 24, and the created link information is stored in the link information storage section 33 of the RAM 13. Figure 10 shows the details of such link information.

The link information storage section 33 is made of a table including items of a date 48, a folder name 49, and a file name 50. Figure 10 shows that one item of data link information is stored on June 28, 2002, and two items of data link information are stored on June 29, 2002.

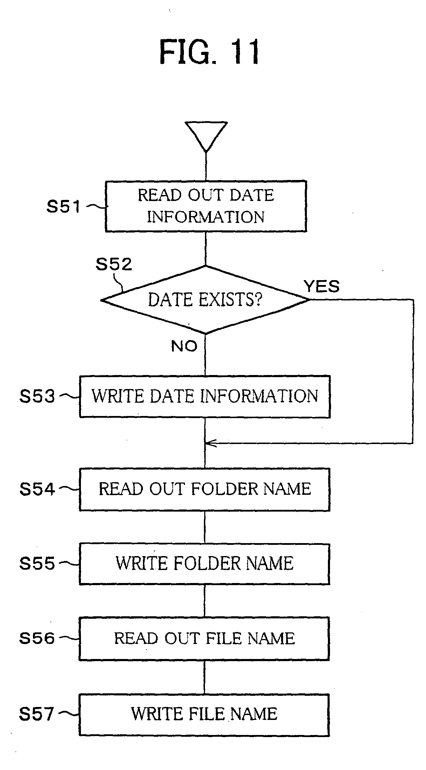

Figure 11 is a flow chart showing creation and storage procedures of link information.

Firstly, in Step S51, the device reads out date information corresponding to one item of data stored in the folder storage section 32 of the RAM 13.

In Step S52, the device judges that whether or not the date information read out in Step S51 is already stored in the date 48 of the link information storage section 33.

Referring to the result of the judgment, and when the read out date is already stored, the sequence goes to Step S54 and the device reads out the folder name of the data corresponding to the date information which has already been stored. The folder name is then written to the link information storage section 33 in Step S56. Next, the file name of the data is read out in Step S56, and the file name is written to the link information storage section 33 in Step 57 so as to complete the link information.

Further, when the date read out in Step S52 is not stored, the read out date is written to the date 48 of the link information storage section 33 as new date information (Step S53), and then the sequence goes to the operations of Step S54 and later operations, i.e., writings of the folder name and the file name are sequentially carried out, thus completing link information.

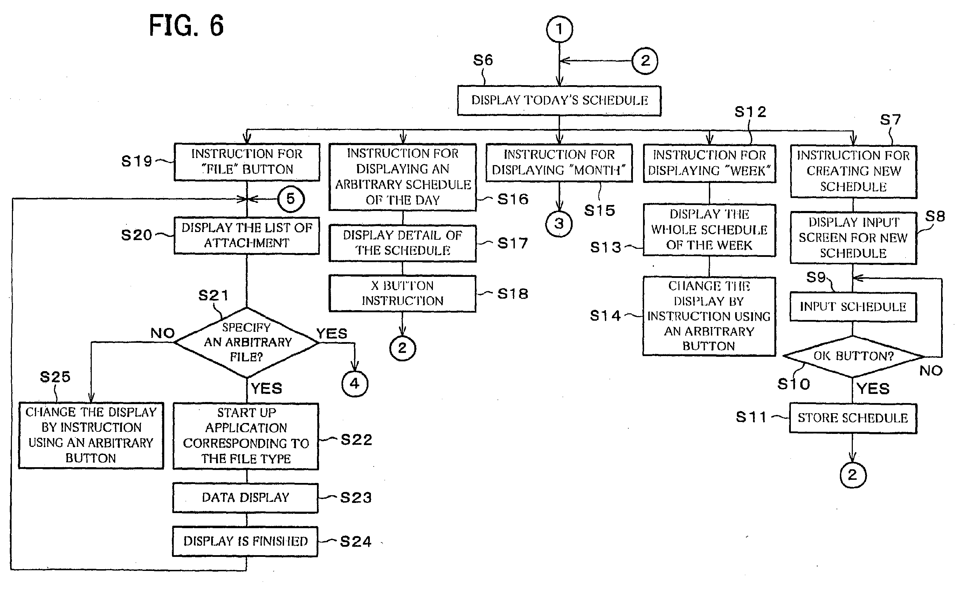

The following will explain operation procedures of a schedule application in the information processing device with reference to the flow chart of Figure 6.

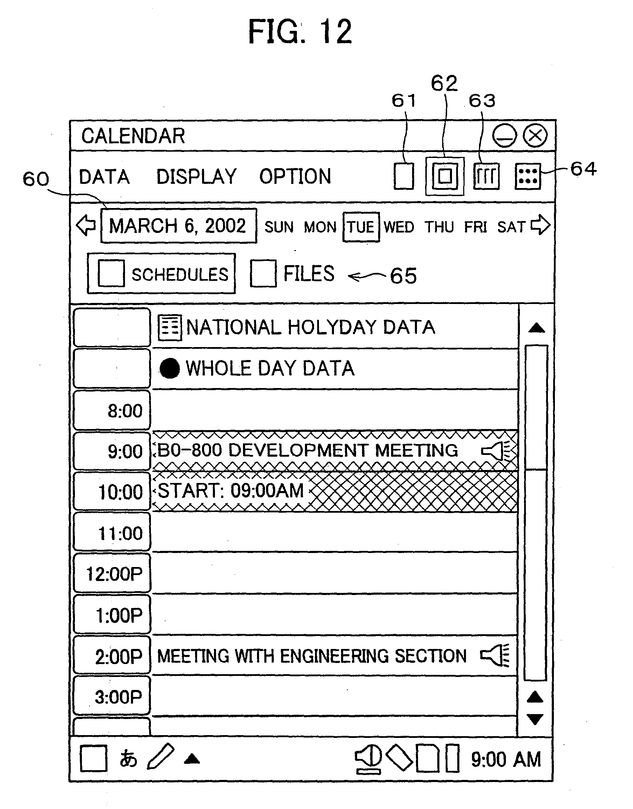

Firstly, the today's schedule is displayed in Step S6. As a specific example, Figure 12 shows a screen displayed in the display section 2 of the information processing device 1. Note that, the characters and icons displayed in this concrete screen example are all can operate as keys or input buttons. Figure 12 shows the state where the schedules of March 6, 2002 are displayed by being selected with a date button 60. The date button 60 may carry out calendar display (not shown) by being pressed with a pen 5, so as to allow the user to change the display of the schedules to an arbitrary day. In the figure, plural schedules are already inputted for the day.

Further, in the same figure, the display may be changed by using a new data storing button 61, a day schedule display button 62, a week schedule display button 63, and a month schedule display button 64 and a file button 65. This display changing operation will be described in the explanations for Step S27 and later steps.

By pressing the new data storing button 61 of Figure 12 in Step S7, the display section 2 changes its display from the today's schedule to an input screen for storing a new schedule (Step S8).

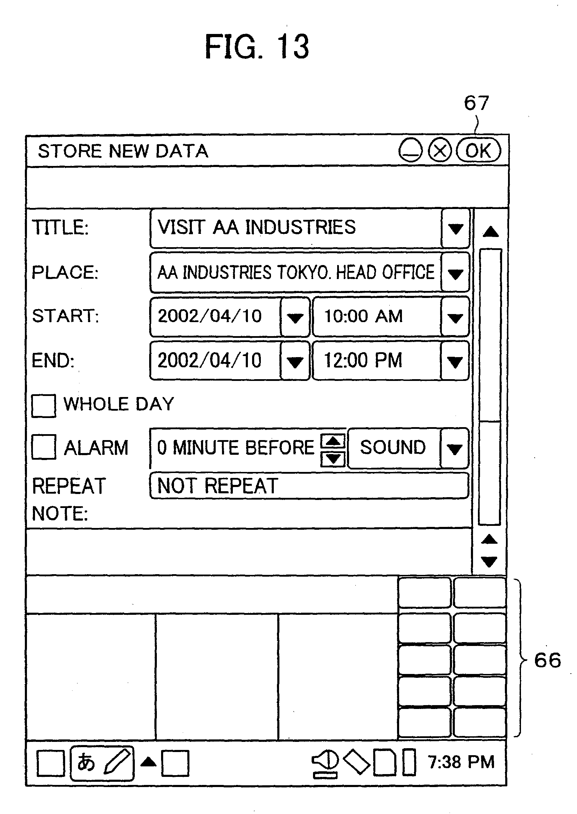

Then, a new schedule is inputted in Step S9. More specifically, this input of a new schedule is carried out with the new schedule input screen shown in Figure 13, which allows the user to input the title, the place, and the start and end times. Note that, text input is performed by a text input section 66 as required.

When a OK button 67 is pressed in Step S 10, the sequence goes to Step S11 so as to store the inputted schedule in a schedule storage section 34 of the RAM 13, and then goes back to Step S6. Note that, when the OK button 67 is not pressed in Step S10, the schedule input may be carried on as required.

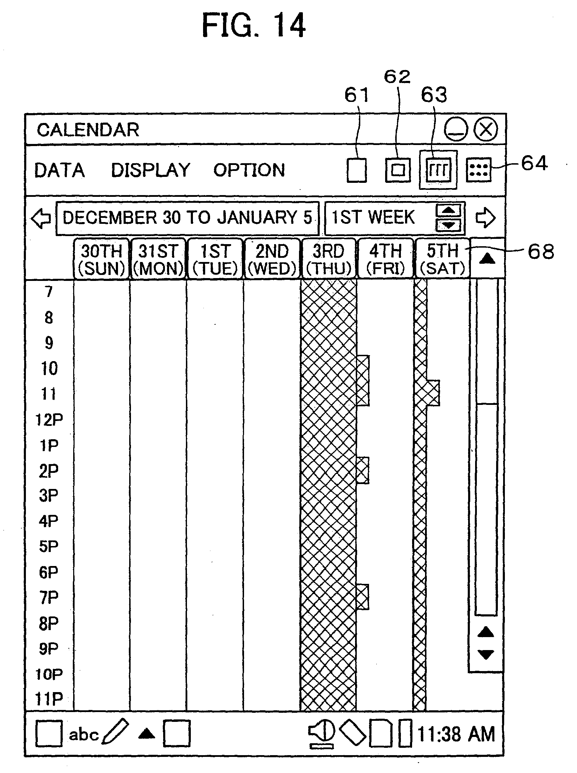

Next, by pressing the week schedule display button 63 of Figure 12 in Step S12, the display section 2 changes its display from the today's schedule display to week schedule display (Step S13). A concrete example of this display is shown in Figure 14.

In the display shown in Figure 14, the inputted schedules are displayed as a bar graph. Further, as with the display of Figure 12, this display also has the new data storing button 61, the day schedule display button 62, the week schedule display button 63, and the month schedule display button 64. Further, the display can be changed to schedules of a certain day by specifying the day by the date button 68 (Step S14).

Next, by pressing the month schedule display button 64 of Figure 12 in Step S15, the display section 2 changes its display from the week schedule display to month schedule display. This operation will be described in detail later.

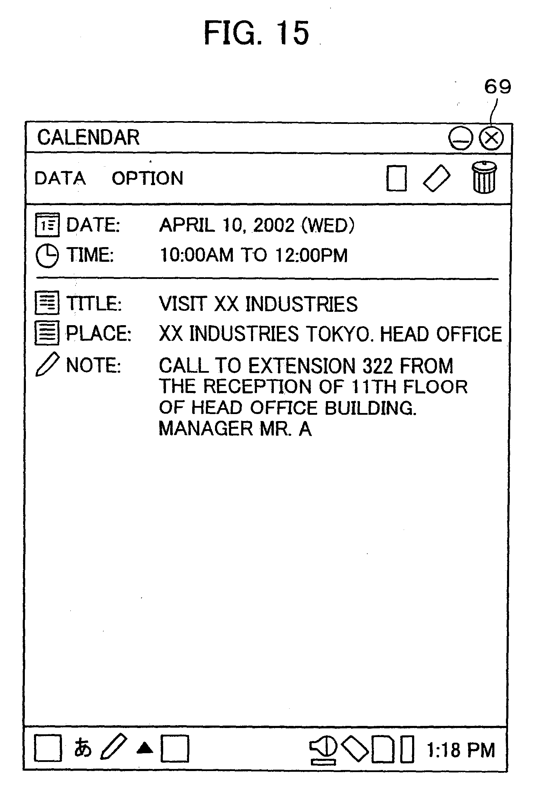

Next, by selecting an arbitrary schedule from plural schedules displayed in Figure 12 in Step S16, the display section 2 changes its display from the today's schedule to display for details of each schedule (Step S17). Figure 15 shows the details of a schedule as a concrete example. When a x button 69 in the display shown in Figure 15 is pressed, the sequence goes back to Step S6 (Step S18).

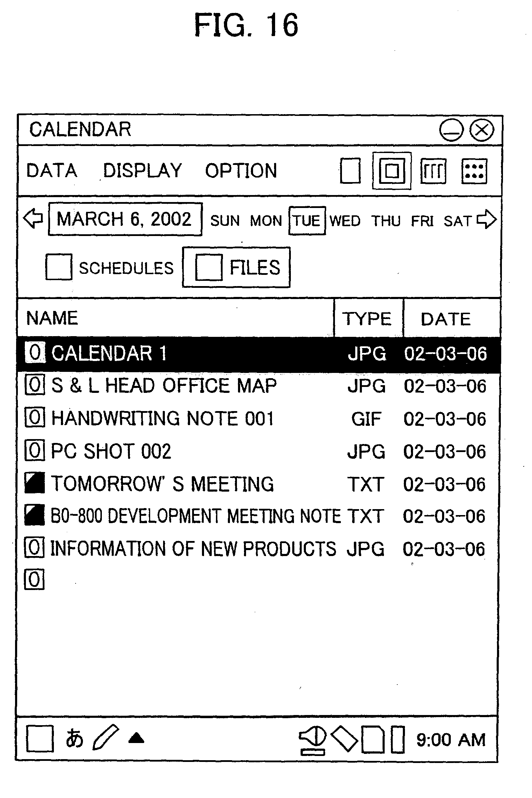

Next, by pressing the file button 65 of Figure 12 in Step S19, the display section 2 displays a list of files attached to the schedules for the day (Step S20). Figure 16 shows a list of plural attachments as a concrete example. The list of Figure 16 is displayed by referring to the link information storage section 33 of the RAM 13. By selecting an arbitrary file from the plural attachments displayed as a list by using the pen 5 in Step S21, the device starts up an application program corresponding to the type of the selected file (Step S22) and displays the data of the file (Step S23). Note that, the application program is one of the various application programs stored in the ROM 12. The display of attachment is finished by pressing an end button (not shown) (Step S24) provided in the application program, and the sequence goes back to Step S20.

Further, when the user does not select any attachment files in Step S21, the display of the attachment list can be changed to other display by using any desired buttons shown in Figure 16 (Step S25).

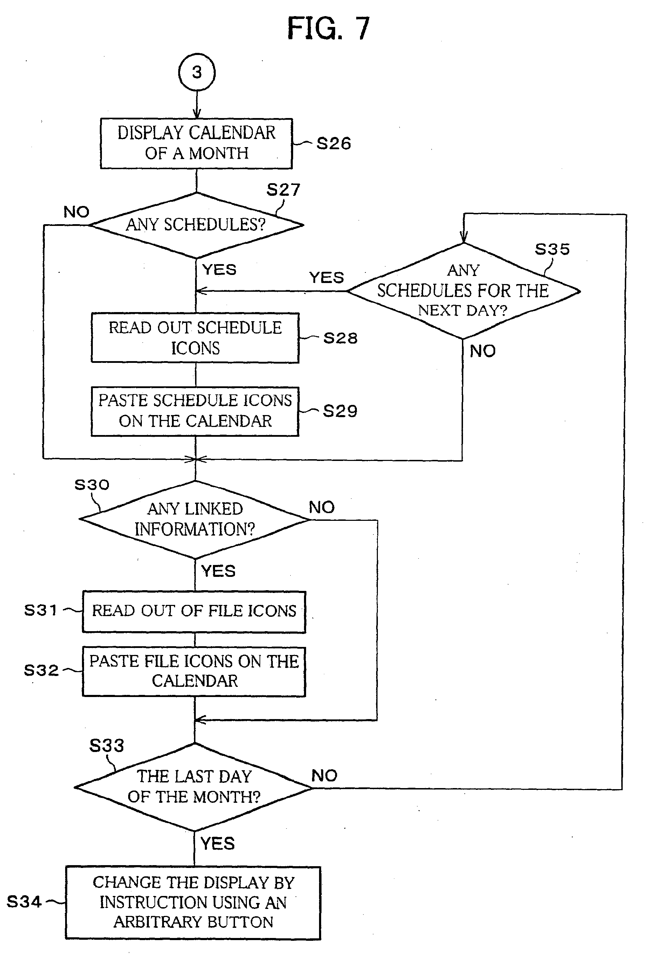

Figure 7 is a flow chart showing steps after Step S15; more specifically, showing procedures for relating the link information to the calendar at the time of display.

Next, a calendar for a month is displayed in Step S26. Specifically, if the device displays the schedules for March 6, 2002 for example, the device will display the whole calendar of March in this step.

In Step S27, the device judges if any schedules exist for the first day of the month. When the device judges that there is a schedule for the first day, a schedule icon is read out from the icon storage section 23 of the ROM 12 (Step S28) so as to be pasted to the first day of the calendar in Step S29.

Next, in Step S30, the device judges if any link information exist for the first day in the date 48 of the link information storage section 33 of the RAM 13. When the device judges that there is link: information for the first day, a file icon is read out from the icon storage section 23 of the ROM 12 (Step S31) so as to be pasted to the first day of the calendar (Step S32). Note that, it is preferable that the file icon and the schedule icon have different shapes from each other.

In Step 33, the device judges if it is the last day of the month, and in case of the last day, the sequence goes to Step S34. In the Step 34, the calendar display can be changed to other display by using any buttons displayed in the screen.

The foregoing sequence is procedures for a single day, and in this case, the sequence goes to Step S35 for finding the schedule for the next day and checking if there is any link information.

In Step S35, the same operation from Step S27 is carried out for the next day. When there is any schedules for the next day in Step S35, the sequence goes to Step S28. Further, when the device judges that there is no schedules for the next day, the sequence goes to Step S30, and if the device judges there is no link information in Step 30, the sequence goes to Step S33.

These procedures are repeated until, the device completes pasting icon operation to the calendar for indicating schedules and link information of the last day of the month.

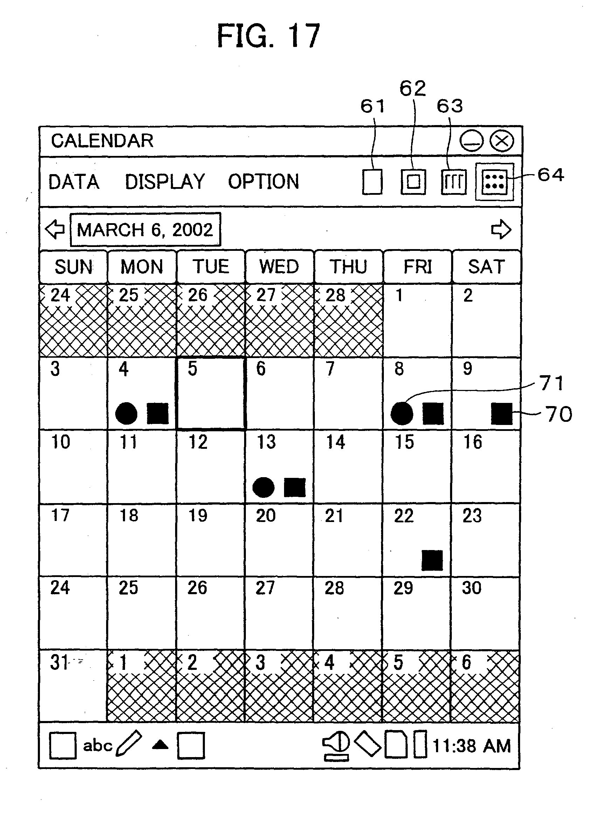

Figure 17 is a drawing showing a concrete example of a calendar for a month, which is displayed during the operations shown in Figure 7. In the figure, "■" is displayed as a schedule icon 70, and "•" is displayed as a file icon 71. For example, the file icon 71 is displayed in March 4, 2002, which means there is an attachment file for the day. Further, for March 8, 2002, both the schedule icon 70 and the file icon 71 are displayed, which means there is a schedule, and an attachment file for the day.

As described, in the present invention, when the device receives file data transmitted from external information devices, the device displays an icon in the calendar according to the date information included in the data file, thus easily carrying out file data arrangement.

Further, since creation of the link information requires minimum data, the file data arrangement can be carried out with a small memory capacity.

In the example above, when displaying the file data transmitted from external information devices, the device relates the file data to the calendar as link information, according to the date information of the file data; however, the information processing device of the present invention also is provided with a function for changing the date information to a different date and displaying the file data by relating the new date information to the calendar. This function allows the user to change the date of the file data, which has been stored in the device, and store the file data to be used for other schedules.

This function will be described in detail below.

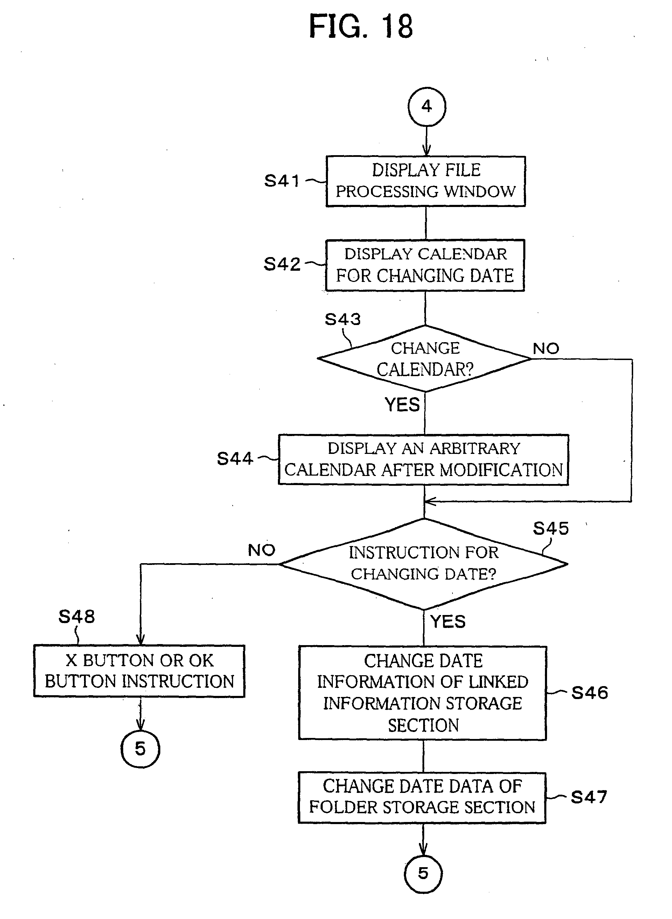

Figure 16 is a drawing showing a concrete example of display of a list of files attached to a schedule. The date changing operation of the file data is performed with this display. More specifically, the operation is carried out based on the flow chart shown in Figure 18.

Firstly, in Step S21 of Figure 6, there are two ways for specifying an arbitrary file. For the first one, the user touches the displayed file with the input pen 5 so that the sequence goes to Step S22. For the second one, the user keeps touching the displayed file for a while. The following will explain with reference to Figure 18 this case, i.e., the case when the user keeps touching the displayed file for a while with the input pen 5.

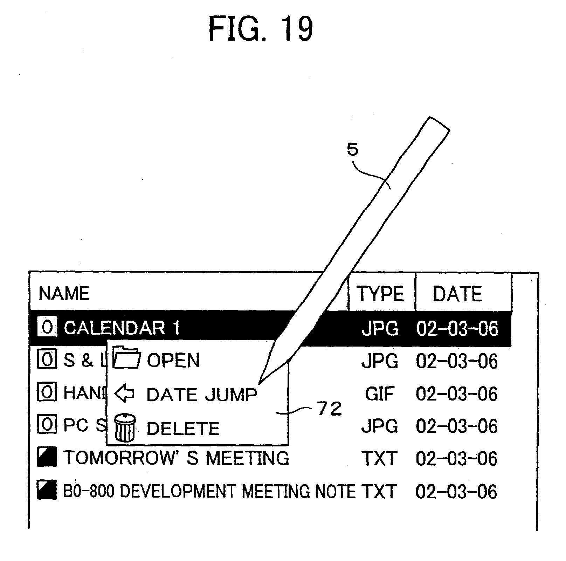

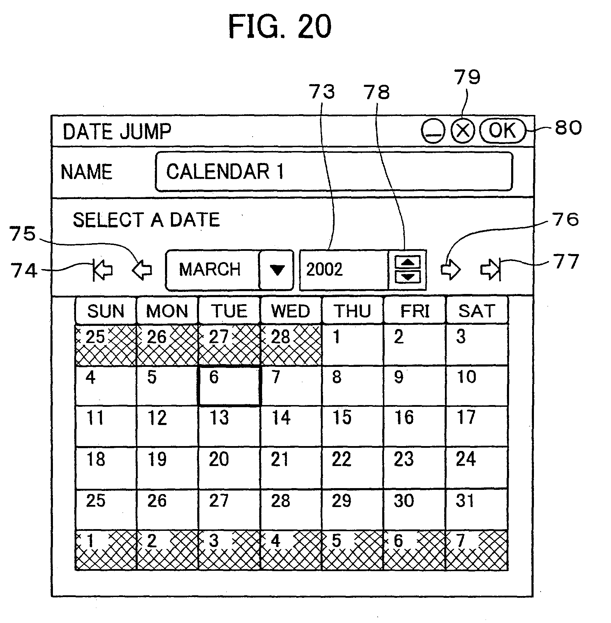

When the user keeps touching the displayed file in Step S41, a file processing window 72 appears on the screen, which is specifically shown in Figure 19. Then, when the user moves the input pen 5 to "Date Jump" in the file processing window 72, a calendar for changing the date of the file data appears (Step S42). This calendar display corresponds to the year and the month of the date information of the file data. Figure 20 shows a concrete example of this calendar display. Since the file data specified in Step S41 includes the date information of March 6, 2002, the 6th of the month is outlined with a bold frame in the calendar of figure 20.

When the user changes the calendar display in Step S43, the user then takes step S44, which is instruction for displaying the calendar of an arbitrate date. More specifically, the user instructs the device to display an arbitrary calendar by using a button 74 for displaying the calendar of January of the year displayed in a year display 73, a button 75 for displaying the previous month, a button 76 for displaying the next month, a button 77 for displaying the calendar of December of the year displayed in the year display 73, a button 78 for changing the year displayed in the year display 73 (Step S44).

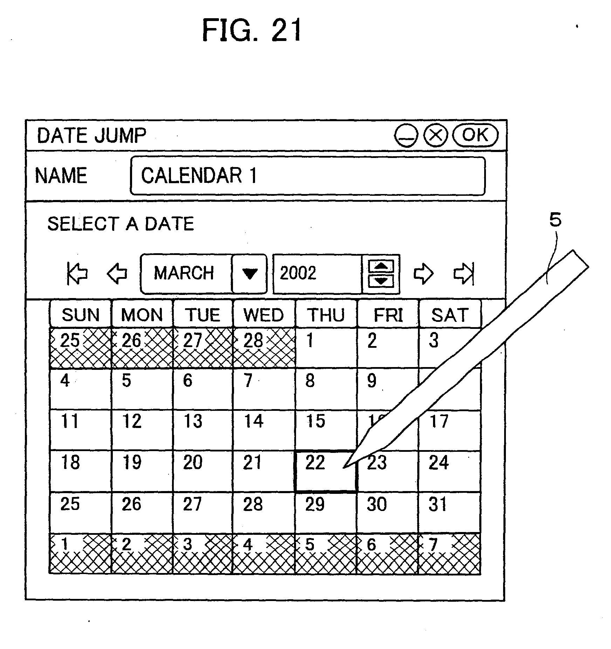

Next, the user takes Step S45 so as to instruct the device to change the date. More specifically, the user selects an arbitrary day of the month with the input pen 5. For example, Figure 21 shows the case when the user selects the 22nd of the month with the input pen 5, so that the 22nd is outlined with a bold frame in the calendar in this figure, as with Figure 20 where the 6th of the month is outlined with a bold frame.

Note that, when the user does not change the calendar display in Step S43, i.e., the user only changes the day with the same year and month of the file data, the calendar is not required to be changed and therefore the sequence goes to step S45.

When the user instructs to change the day in Step S45, the date 48 of the link information storage section 33 in the RAM 13 is changed in Step S46, and then also the date data in the data 47 stored in the folder storage section 32 of the RAM 13 is changed in Step S47.

When the operation of Step S47 is carried out, the sequence goes back to Step S20 of Figure 6; however, the data file whose date has been changed in the foregoing operation is excluded in the list.

Further, when the user does not intend to change the day in Step S45, the user finishes the calendar display by using the x button 79 or the OK button 80 of Figure 20 (Step S48), and the sequence goes back to the operation of Step S20 of Figure 6.

The information processing device changes the date of the file data in such a manner, and the file data whose date has been thus changed is attached to the schedule of the new date. Further, the device is also capable of displaying an icon in the new date of the calendar so as to indicate that there is file data in the day.

Note that, the explanation of the present example has been given based on file data transmitted from external information devices; however, a typical information processing device is generally provided with a function for creating file data therein. The function is realized by, for example, application programs for creating documents or table data, or an application program for saving and storing image data obtained through the Internet.

Such application programs are stored in the various application programs 22 in the ROM 12, and the file data created by these programs includes date information for allowing creation of link information.

The described information processing device can also be realized by a program for creating link information by using file data which at least includes date information, and relating the data to the calendar at the time of display.

The present invention may be such a program itself, or a storage medium having the program therein. The storage medium may be any media readable and executable by a computer or a PDA, for example, a floppy disk®, a PC card, a compact flash®, or a CD-ROM.

As has been described, in the present invention, since the information processing device displays an icon in the calendar for indicating the presence of an attachment, the user can easily find out that there is an attachment data file in the schedule.

Further, the present invention also allows the user to change the date of the file data related to the calendar by selecting an arbitrary date in a date changing calendar, so that the file data can easily be displayed in a different date.

The embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

## Claims

1. An information processing device including time table displaying means for displaying a time table for a first division of time, the time table showing a list of items of second divisions of time which constitute the first division of time, **characterized by** comprising:
data file receiving means for receiving data file including date information and a content of work,
wherein:
when the data file receiving means receives the data file, the time table displaying means displays a specific item of the list of items of the second divisions of time according to the date information included in the data file, while indicating a presence of data file corresponding to the specific item.

2. The information processing device as set forth in claim 1, wherein:
the time table displaying means displays the time table as a calendar in which the first division of time is a month, and the second divisions of time are days.

3. The information processing device as set forth in claim 1, wherein:
the time table displaying means displays the time table as a day schedule in which the first division of time is a day, and the second divisions of time are hours.

4. The information processing device as set forth in claim 1, further comprising:
data storing means for storing data which is received from a user of the information processing device.

5. The information processing device as set forth in claim 1, further comprising:
data receiving means for receiving data file from an external device.

6. The information processing device as set forth in claim 4, wherein:
the time table displaying means displays data included in the data file stored in the data storing means by relating the data to the time table.

7. The information processing device as set forth in claim 4, wherein:
the time table displaying means displays the items of the second divisions of time in the time table by using the date information included in the data file stored in the data storing means so that the items of the second divisions of time are displayed while being related to the date information.

8. The information processing device as set forth in claim 5, wherein:
the time table displaying means displays data included in the data file received by the data receiving means by relating the data to the time table.

9. The information processing device as set forth in claim 5, wherein:
the time table displaying means displays the items of the second divisions of time in the time table by using the date information included in the data file received by the data receiving means so that the items of the second divisions of time are displayed while being related to the date information.

10. The information processing device as set forth in claim 4, further comprising;:
link information creating means for creating link information based on data included in the data file stored in the data storing means, so as to display the data by being related to the time table displayed by the time table displaying means,
wherein:
the time table displaying means displays the link information created by the link information creating means by relating the link information to the time table.

11. The information processing device as set forth in claim 5, further comprising:
link information creating means for creating link information based on data included in the data file received by the data receiving means, so as to display the data by being related to the time table displayed by the time table displaying means,
wherein:
the time table displaying means displays the link information created by the link information creating means by relating the link information to the time table.

12. The information processing device as set forth in claim 4, further comprising:
link information creating means for creating link information based on data included in the data file stored in the data storing means, so as to display the data by being related to the time table displayed by the time table displaying means; and
icon storing means for storing an icon to be displayed in the time table based on the link information created by the link information creating means,
wherein:
the time table displaying means displays the link information created by the link information creating means in a form of the icon stored in the icon storing means by relating the link information to the time table.

13. The information processing device as set forth in claim 5, further comprising:
link information creating means for creating link information based on data included in the data file received by the data receiving means, so as to display the data by being related to the time table displayed by the time table displaying means; and
icon storing means for storing an icon to be displayed in the time table based on the link information created by the link information creating means,
wherein:
the time table displaying means displays the link information created by the link information creating means in a form of the icon stored in the icon storing means by relating the link information to the time table.

14. The information processing device as set forth in claim 4, further comprising:
link information creating means for creating link information based on data included in the data file stored in the data storing means, so as to display the data by being related to the time table displayed by the time table displaying means;
link information storing means for storing the link information created by the link information creating means; and
icon storing means for storing an icon to be displayed in the time table based on the link information stored in the link information storing means,
wherein:
the time table displaying means displays the link information stored in the link information storing means in a form of the icon stored in the icon storing means by relating the link information to the time table.

15. The information processing device as set forth in claim 5, further comprising:
link information creating means for creating link information based on data included in the data file received by the data receiving means, so as to display the data by being related to the time table displayed by the time table displaying means;
link information storing means for storing the link information created by the link information creating means; and
icon storing means for storing an icon to be displayed in the time table based on the link information stored in the link information storing means,
wherein:
the time table displaying means displays the link information stored in the link information storing means in a form of the icon stored in the icon storing means by . relating the link information to the time table.

16. The information processing device as set forth in claim 4, further comprising:
schedule storing means for storing a schedule for a day,
wherein:
the time table displaying means operates as schedule displaying means so as to display the schedule for a day as the time table, and
the time table displaying means displays data included in the data file stored in the data storing means by relating the data to the schedule for a day.

17. The information processing device as set forth in claim 5, further comprising:
schedule storing means for storing a schedule for a day,
wherein:
the time table displaying means operates as schedule displaying means so as to display the schedule for a day as the time table, and
the time table displaying means displays data included in the data file received by the data receiving means by relating the data to the schedule for a day.

18. The information processing device as set forth in claim 1, further comprising:
date changing time table displaying means for displaying a date changing time table which allows, when data included in the data file is displayed by being related to the time table by the time table displaying means, a user to change a date related to the time table,
wherein:
when the user instructs to change the date related to the time table by selecting a different date in the date changing time table displayed by the date changing time table displaying means, the time table displaying means displays the time table with the date which has been changed.

19. The information processing device as set forth in claim 14, further comprising;:
date changing time table displaying means for displaying a date changing time table which allows, when data included in the data file is displayed by being related to the time table by the time table displaying means, a user to change a date related to the time table; and
link information date changing means for changing date information in the link information storing means when the user instructs to change the date related to the time table by selecting a different date in the date changing time table displayed by the date changing time table displaying means,
wherein:
the time table displaying means displays the time table with the date which has been changed by the link information date changing means by changing the date information in the link information storing means.

20. The information processing device as set forth in claim 15, further comprising:
date changing time table displaying means for displaying a date changing time table which allows, when data included in the data file is displayed by being related to the time table by the time table displaying means, a user to change a date related to the time table; and
link information date changing means for changing date information in the link information storing means when the user instructs to change the date related to the time table by selecting a different date in the date changing time table displayed by the date changing time table displaying means,
wherein:
the time table displaying means displays the time table with the date which has been changed by the link information date changing means by changing the date information in the link information storing means.

21. The information processing device as set forth in any one of claims 6, 7, 10, 12, 14, 16, 18, 19 and 20,
wherein:
the data storing means separately stores the data file by type of data.

22. The information processing device as set forth in claim 14 or 15, further comprising:
the link information storing means stores a date, a folder name indicating a type of the data, and a file name of the data.

23. An information processing device including a calendar displaying means for displaying a calendar,
**characterized by** comprising:
data storing means for storing file data at least including date information,
the information processing device displaying the file data stored in the data storing means by relating the file data to the calendar displayed by the calendar displaying means.

24. An information processing device including calendar displaying means for displaying a calendar,
**characterized by** comprising:
data storing means for storing file data at least including date information,
the information processing device displaying the file data stored in the data storing means in the calendar displayed by the calendar displaying means, according to date information included in the file data.

25. An information processing device including calendar displaying means for displaying a calendar, and receiving file data from other information device,
**characterized by** comprising:
data receiving means for receiving the file data from the other information device,
the information processing device displaying the file data received by the data receiving means by relating the file data to the calendar displayed by the calendar displaying means.

26. An information processing device including calendar displaying means for displaying a calendar, and receiving file data from other information device,
**characterized by** comprising:
data receiving means for receiving the file data from the other information device,
the information processing device displaying the file data received by the data receiving means in the calendar displayed by the calendar displaying means, according to date information included in the file data.

27. An information processing device including calendar displaying means for displaying a calendar,
**characterized by** comprising:
data storing means for storing file data at least including date information; and
link information creating means for creating link information based on the file data stored in the data storing means, so as to display the file data by being related to the calendar displayed by the calendar displaying means,
the information processing device displaying the link information created by the link information creating means by relating the link information to the calendar.

28. An information processing device including calendar displaying means for displaying a calendar, and receiving file data from other information device,
**characterized by** comprising:
data receiving means for receiving the file data from the other information device; and
link information creating means for creating link information based on the file data received by the data receiving means, so as to display the file data by being related to the calendar displayed by the calendar displaying means,
the information processing device displaying the link information created by the link creating means by relating the link information to the calendar displayed by the calendar displaying means.

29. An information processing device including calendar displaying means for displaying a calendar,
**characterized by** comprising:
data storing means for storing file data at least including date information;
link information creating means for creating link information based on the file data stored in the data storing means, so as to display the file data by being related to the calendar displayed by the calendar displaying means; and
icon storing means for storing an icon to be displayed in the calendar based on the link information created by the link information creating means,
the information processing device displaying the link information created by the link information creating means in a form of the icon stored in the icon storing means by relating the link information to the calendar.

30. An information processing device including calendar displaying means for displaying a calendar, and receiving file data from other information device,
**characterized by** comprising:
data receiving means for receiving the file data from the other information device;
link information creating means for creating link information based on the file data received by the data receiving means, so as to display the file data by being related to the calendar displayed by the calendar displaying means; and
icon storing means for storing an icon to be displayed in the calendar based on the link information created by the link information creating means,
the information processing device displaying the link information created by the link information creating means in a form of the icon stored in the icon storing means by relating the link information to the calendar.

31. An information processing device including calendar displaying means for displaying a calendar,
**characterized by** comprising:
data storing means for storing file data at least including date information;
link information creating means for creating link information based on the file data stored in the data storing means, so as to display the file data by being related to the calendar displayed by the calendar displaying means;
link information storing means for storing the link information created by the link information creating means; and
icon storing means for storing an icon to be displayed in the calendar based on the link information stored in the link information storing means,
the information processing device displaying the link information stored in the link information storing means in a form of the icon stored in the icon storing means by relating the link information to the calendar.

32. An information processing device including calendar displaying means for displaying a calendar, and receiving file data from other information device,
**characterized by** comprising:
data receiving means for receiving the file data from the other information device;
link information creating means for creating link information based on the file data stored in the data storing means, so as to display the file data by being related to the calendar displayed by the calendar displaying means;
link information storing means for storing the link information created by the link information creating means; and
icon storing means for storing an icon to be displayed in the calendar based on the link information stored in the link information storing means,
the information processing device displaying the link information stored in the link information storing means in a form of the icon stored in the icon storing means by relating the link information to the calendar.

33. An information processing device including schedule displaying means for displaying a schedule,
**characterized by** comprising:
data storing means for storing file data at least including date information; and
schedule storing means for storing a schedule for a day,
the information processing device displaying the file data stored in the data storing means by relating the file data to the schedule displayed by the schedule displaying means.

34. An information processing device including schedule displaying means for displaying a schedule, and receiving file data from other information device,
**characterized by** comprising:
data receiving means for receiving the file data from the other information device; and
schedule storing means for storing a schedule for a day,
the information processing device displaying the file data received by the data receiving means by relating the file data to the schedule displayed by the schedule displaying means.

35. The information processing device as set forth in any one of claims 23 through 34, further comprising:
date changing calendar displaying means for displaying a date changing calendar which allows, when the file data is displayed by being related to the calendar by the calendar displaying means, a user to change a date related to the calendar,
when the user instructs to change the date related to the calendar by selecting a different date in the date changing calendar displayed by the date changing calendar displaying means, the calendar displaying means displaying the calendar with the date which has been changed.

36. The information processing device as set forth in claim 31 or 32, further comprising:
date changing calendar displaying means for displaying a date changing calendar which allows, when the file data is displayed by being related to the calendar by the calendar displaying means, a user to change a date related to the calendar; and
link information date changing means for changing date information in the link information storing means when the user instructs to change the date related to the calendar by selecting a different date in the date changing calendar displayed by the date changing calendar displaying means,
the information processing device displaying the calendar with the date which has been changed.

37. The information processing device as set forth in any one of claims 23, 24, 27, 29, 31 and 33, wherein:
the data storing means separately stores the data file by type of data.

38. The information processing device as set forth in claim 31 or 32, wherein:
the link information storing means stores a date, a folder name indicating a type of the data, and a file name of the data.

39. An information. processing method for displaying a time table for a first division of time, which shows a list of items of second divisions of time which constitute the first division of time, **characterized by** comprising the steps of:
(a) receiving data file including date information and a content of work; and
when the data file is received,
(b) displaying a specific item of the list of items of the second divisions of time according to the date information included in the data file, while indicating a presence of data file corresponding to the specific item.

40. An information processing program for displaying a time table for a first division of time, which shows a list of items of second divisions of time which constitute the first division of time, **characterized by** causing a computer to execute the steps of:
(a) receiving data file including date information and a content of work; and
when the data file is received,
(b) displaying a specific item of the list of items of the second divisions of time according to the date information included in the data file, while indicating a presence of data file corresponding to the specific item.

41. A computer-readable storage medium having the information processing program according to claim 40.

42. An information processing method, comprising the steps of:
(a) receiving file data from other information device;
(b) storing file data which has been received;
(c) creating link information based on such as date information included in the file data which has been stored;
(d) displaying a calendar;
(e) displaying related information in the calendar with respect to a date corresponding to a date in the link information which has been created.

43. An information processing program to cause a computer to execute the steps of:
(a) receiving file data from other information device;
(b) storing file data which has been received;
(c) creating link information based on such as date information included in the file data which has been stored;
(d) displaying a calendar;
(e) displaying related information in the calendar with respect to a date corresponding to a date in the link information which has been created.

44. A computer-readable storage medium having the information processing program according to claim 43.
